# EUROPÄISCHE PATENTSCHRIFT

(11) **EP 0 718 124 B1**
(45) Veröffentlichungstag und Bekanntmachung des Hinweises auf die Patenterteilung: **29.07.1998**
(21) Anmeldenummer: 95890200.9
(22) Anmeldetag: 09.11.1995
(51) Int. Cl.: B60C 11/03, B60C 11/04

(54) **Fahrzeugreifen**
Vehicle tyre
Bandage pneumatique pour véhicule

(30) Priorität: 21.12.1994 AT 2373/94
(43) Veröffentlichungstag der Anmeldung: 26.06.1996
(73) Patentinhaber: Semperit Reifen Aktiengesellschaft, A-2514 Traiskirchen (AT)
(72) Erfinder: Sauerzapf, Johannes, Dipl.-Ing., A-2700 Wiener Neustadt (AT)
(74) Vertreter: Vinazzer, Edith, Dipl.-Ing.

(56) Entgegenhaltungen:
- EP-A- 0 397 639
- EP-A- 0 420 834
- DE-A- 1 605 638
- GB-A- 2 008 043

## Beschreibung

Die vorliegende Erfindung betrifft einen Fahrzeugreifen mit einem drehrichtungsgebunden und bezüglich des Umfanges der Lauffläche asymmetrisch gestalteten Laufstreifenprofil, welches somit fahrzeugbezogen einen Außen- und einen Innenabschnitt aufweist, in welchen pfeilartig zum Mittelbereich des Laufstreifens verlaufende Querrillen angeordnet sind, wobei im Mittelbereich des Laufstreifens zumindest eine, insbesondere gerade verlaufende breite Umfangsnut angeordnet ist und sowohl im Außen- als auch im Innenabschnitt Schulterblockreihen begrenzende Umfangsnuten vorgesehen sind, und wobei der Fahrflächenanteil im Außenabschnitt größer ist als im Innenabschnitt, dessen Fahrflächenanteil 55 bis 65% beträgt.

Ein derartiger Fahrzeugreifen mit einem gleichzeitig drehrichtungsgebunden und bezüglich der Profilumfangsmittellinie asymmetrisch gestalteten Laufstreifenprofil ist beispielsweise aus der EP-A 0 420 834 bekannt. Das Laufstreifenprofil dieses Reifens besitzt sowohl im Innenabschnitt als auch im Außenabschnitt etwa V-förmig verlaufende Querrillen, entlang der Mittelumfangslinie ist eine breite, gerade verlaufende Umfangsnut angeordnet. Zusammen mit weiteren Umfangsnuten besitzt das Laufstreifenprofil sowohl im Innen- als auch im Außenabschnitt je zwei Blockreihen. Eine Reihe weiterer konstruktiver Maßnahmen befaßt sich mit der positiven Beeinflussung der Geräuschentwicklung während des Fahrbetriebes. So wird die Gesamtpitchanzahl (die Gesamtanzahl der über den Reifenumfang vorgesehenen gleichartigen Profilabschnitte) im Außenabschnitt wesentlich geringer gewählt als die Gesamtpitchanzahl über den Reifenumfang im Innenabschnitt. Aus diesem Grund wird ferner auch den Quernuten im Außenabschnitt eine konstante Breite verliehen.

Die Erfindung hat sich nun die Aufgabe gestellt, einen Reifen mit einem derartigen Laufstreifenprofil weiter zu verbessern, insbesondere was die erzielbaren Fahreigenschaften, beispielsweise die Lenkexaktheit oder die Kurvenstabilität, und auch was das Aquaplaningverhalten, also das Wasserableitvermögen insbesondere bei höheren Geschwindigkeiten, betrifft.

Gelöst wird die gestellte Aufgabe erfindungsgemäß dadurch, daß im mittleren Bereich des Innenabschnittes, an die dortige Schulterblockreihe anschließend, eine Blockreihe angeordnet ist, deren Blöcke in Umfangsrichtung durch jeweils zumindest eine Grundanhebung in den die Einzelblöcke trennenden Quernutbereichen gegenseitig abgestützt sind, und daß im Außenabschnitt über einen Bereich von 30 bis 40 %, vorzugsweise mindestens 35 %, der Laufstreifenbreite, gemessen vom äußeren Laufstreifenrand, der Fahrflächenanteil (Positivanteil) mindestens 75 % beträgt.

Gemäß der vorliegenden Erfindung wird somit ein Laufstreifenprofil geschaffen, welches im wesentlichen funktionsgetrennt optimiert ist. Dem Außenabschnitt kommt durch den hohen Fahrflächenanteil über einen Großteil seiner Breite vorrangig die Aufgabe zu, die Fahreigenschaften, wie etwa die Lenkexaktheit und die Kurvenstabilität, sicherzustellen, im Laufstreifeninnenabschnitt steht ein hoher Negativanteil zur Verfügung, um ein hohes Wasserableitvermögen zu gewährleisten, wobei aber auch gleichzeitig ein gleichmäßiger Abrieb in Umfangsrichtung sichergestellt ist, was insbesondere durch die Blockreihe mit den sich gegenseitig in Umfangsrichtung abstützenden Blöcken, erzielt wird.

Dabei ist es von Vorteil, wenn der Fahrflächenanteil im Bereich des Außenabschnittes mindestens 78 % und höchstens 90 % beträgt.

Bei einer bevorzugten Ausführungsform sind dabei die Grundanhebungen zwischen den Einzelblöcken der Blockreihe über mindestens 70 % der diese Blockreihen trennenden Quernutbereiche vorgesehen. Die dadurch erzielte Stabilität in der Profilstruktur ist besonders günstig für das Erzielen eines gleichmäßigen Abriebes.

Ein besonders gleichmäßiger Abrieb wird auch dadurch unterstützt, wenn sämtliche Quernuten entlang von schwach S-förmig gekrümmten Kurven verlaufen.

Auf das Wasserableitvermögen und die Geradeauslaufstabilität des Profiles wirkt es sich ferner günstig aus, wenn im Laufstreifenmittelbereich zwei breite, insbesondere gerade umlaufende Umfangsnuten angeordnet sind, die durch ein Laufstreifenband voneinander getrennt sind, welches die Umfangsmittellinie des Profiles mitumfaßt, wobei die im Innenabschnitt verlaufenden Quernuten in diesem Laufstreifenband als Sacknuten enden.

Die angesprochene Funktionsverbesserung bezüglich des Fahrverhaltens wird dadurch begünstigt, daß der den hohen Positivanteil umfassende Bereich des Laufstreifens im Außenabschnitt neben der Schulterblockreihe ein Laufstreifenband umfaßt, in welchem die im Außenabschnitt angeordneten Quernuten als Sacknuten enden.

Für eine besonders gute Abstimmung der angesprochenen Profileigenschaften bei gleichzeitiger Verringerung der Geräuschentwicklung ist es von Vorteil, wenn die Gesamtpitchanzahl im Laufstreifeninnen- und im Laufstreifenaußenabschnitt unterschiedlich gewählt wird, wobei sich auch die Pitchfolgen im Laufstreifeninnen- und im Laufstreifenaußenabschnitt voneinander unterscheiden.

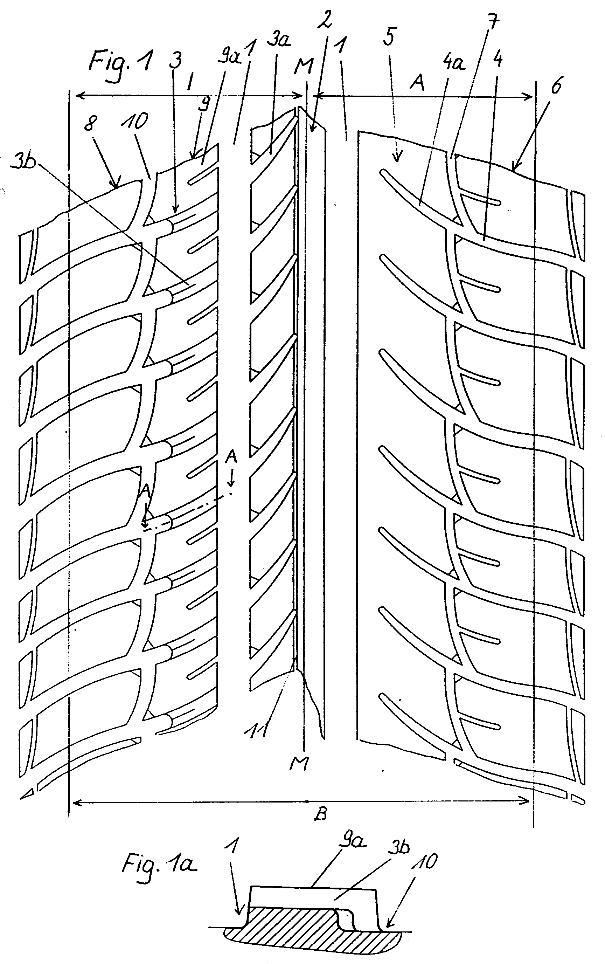

Weitere Merkmale, Vorteile und Einzelheiten der Erfindung werden nun anhand der Zeichnung, die ein Ausführungsbeispiel darstellt, näher beschrieben. Dabei ist in Fig. 1 eine Draufsicht auf eine Teilabwicklung eines erfindungsgemäß gestalteten Laufstreifenprofiles und Fig. 1a ein Schnitt entlang der Linie A-A der Fig. 1, etwas vergrößert, dargestellt.

In der nun nachfolgenden Beschreibung wird das in Fig. 1 dargestellte Laufstreifenprofil insbesondere über seine Breite B, die der Breite in der Bodenaufstandsfläche (gemäß E.T.R.T.O.-Standards Manual) entspricht, betrachtet.

Das für einen hochgeschwindigkeitstauglichen PKW-Reifen vorgesehene Laufstreifenprofil ist drehrichtungsgebunden und gleichzeitig bezüglich der Umfangsmittellinie M-M asymmetrisch gestaltet. Aufgrund der Asymmetrie umfaßt das Laufstreifenprofil einen Innenabschnitt I und einen Außenabschnitt A, wobei der Innenabschnitt I jener ist, welcher bei am Fahrzeug montierten Reifen der Fahrzeuglängsachse zugewandt ist. Für die linken und rechten Achspositionen eines Kraftfahrzeuges sind daher Reifen vorzusehen, deren Profile bezüglich der Längsmittelachse des Fahrzeuges symmetrisch gestaltet sind.

Der Mittelbereich des Laufstreifenprofiles ist durch zwei breite, in Umfangsrichtung gerade verlaufende Umfangsnuten 1 charakterisiert, zwischen welchen ein Laufstreifenband 2 angeordnet ist, welches entlang der Umfangsmittellinie M-M verläuft und durch eine Vielzahl von Sacknuten 3a strukturiert ist. Die Sacknuten 3a bilden die laufstreifeninnenseitig gelegenen Endbereiche von Quernuten 3, die den Innenabschnitt I durchqueren und über die Bodenaufstandsfläche hinaus verlaufen. Die Quemuten 3 folgen jeweils einer schwach S-förmig gekrümmten Kurve, derart, daß der Winkel, den sie im Bereich des Laufstreifenrandes mit der Umfangsmittellinie M-M einschließen ca. 75 bis 85° beträgt, und der Winkel, den die Enden der Sacknuten 3a mit der Mittelumfangslinie M-M einschließen, zwischen 45 und 30°, im vorliegenden Ausführungsbeispiel ca. 35°, beträgt. Auch im Außenabschnitt A sind Quernuten 4, die schwach S-förmig gekrümmten Kurven folgen, vorgesehen, wobei die Quernuten 4 unter Bildung von Sacknuten 4a laufstreifeninnenseitig in einem Laufstreifenband 5 enden, welches unmittelbar an die eine der breiten Umfangsnuten 1 anschließt. Die Anordnung der Quernuten 3, 4 erfolgt derart, daß eine im allgemeinen als gepfeilt bezeichnete Struktur gebildet wird, so daß beim Abrollen des Reifens die jeweils laufstreifeninnenseitig gelegenen Enden der Quemuten 3, 4 zuerst in die Kontaktfläche mit dem Untergrund eintreten.

Eine weitere Umfangsnut 7, die im dargestellten Ausführungsbeispiel als etwa zickzack-förmig verlaufende Umfangsnut ausgebildet ist, trennt das Laufstreifenband 5 von einer Schulterblockreihe 6.

Auch im Innenabschnitt I des Laufstreifens ist außenseitig eine Schulterblockreihe 8 vorgesehen, wobei jedoch zwischen dieser und dem Laufstreifenband 2 eine gesonderte Blockreihe 9 verläuft, die auf der einen Seite durch eine der breiten Umfangsnuten 1 und auf der anderen Seite in Umfangsrichtung durch eine ebenfalls etwa zick-zack-förmig verlaufende Umfangsnut 10 begrenzt ist. Dabei sind jene Quernutabschnitte 3b, die die Einzelblöcke 9a der Blockreihe 9 voneinander in Umfangsrichtung trennen über einen Großteil ihrer Länge, bevorzugt zwischen 70 bis 80 % ihrer Länge, mit einer geringeren Tiefe versehen, als es der sonstigen Dessintiefe, die im allgemeinen 8 mm oder auch geringfügig mehr beträgt, entspricht. Fig. 1a zeigt einen Längsschnitt durch eine der Quernutabschnitte 3b, aus dem ersichtlich ist, daß die Tiefe des angehobenen Bereiches der Quernutabschnitte 3b ca. 50 % der sonstigen Dessintiefe beträgt. Der solcherart angehobene Nutgrund hat zur Folge, daß sich die Einzelblöcke 9a der Blockreihe 9 in Umfangsrichtung gegeneinander abstützen können, was sich günstig auf einen gleichmäßigen Abrieb in Reifenumfangsrichtung auswirkt. Jede Grundanhebung kann ferner, wie dargestellt, zumindest über einen Teil ihrer Länge von einem Feineinschnitt durchsetzt sein, welcher in einer Breite von 0,5 bis 1 mm, insbesondere 0,8 mm, gewählt wird und bis auf die sonstige Dessintiefe reichen kann.

Die als Sacknuten 3a, 4a ausgebildeten Endbereiche der Quernuten 3, 4 können zu ihren geschlossenen Enden zu ebenfalls so gestaltet werden, daß ihre Tiefe, bevorzugt kontinuierlich, abnimmt. Auch diese Maßnahme trägt zur Stabilität des Laufstreifenprofiles und somit zu einem gleichmäßigen Abrieb bei.

Sämtliche Quernuten 3, 4 sind ferner bevorzugt so gestaltet, daß ihre Breite zu den Laufstreifenrändem zu zunimmt, wobei sich die Quernuten 3, 4 insbesondere trompetenförmig erweitern. Zusätzlich sind die Quernuten 4 und die Umfangsnut 7 im Außenabschnitt A schmäler ausgeführt als die Quernuten 3 und die Umfangsnut 10 im Innenabschnitt I. Dabei wird die Ausgestaltung so getroffen, daß der Positivanteil (Anteil an der Gesamtprofilfläche, die mit dem Untergrund in Berührung kommt) in einem großen Bereich des Außenabschnittes A wesentlich größer als im Innenabschnitt I. Im Rahmen der gegenständlichen Erfindung ist der Positivanteil in einem Bereich des Außenabschnittes A von 30 bis 40 % der Laufstreifenbreite B, vom Laufstreifenrand aus gemessen größer als 75 %, insbesondere größer als 78 % und bis zu 90 %. Der Innenabschnitt I wird derart gestaltet, daß sein Positivanteil 55 bis 65 %, vorzugsweise etwa 60 %, beträgt.

Die Enden der Sacknuten 3a werden ferner von einer schmalen, insbesondere zwischen 1 und 2 mm breit gewählten Rille 11 geschnitten, welche gerade und in Umfangsrichtung verläuft und eine geringe Tiefe, von 1 bis 2 mm, besitzt. Diese Maßnahme ist aus Geräuschgründen von Vorteil.

Auf das während des Abrollens des Reifens entstehende Reifen/Fahrbahngeräusch wirkt es sich ferner günstig aus, wenn die Gesamtpitchanzahl (die Gesamtanzahl der über den Reifenumfang vorgesehenen gleichartigen Profilabschnitte) im Innenabschnitt I größer ist als im Außenabschnitt A. Wie allgemein üblich werden dabei sowohl im Außen- als auch im Innenabschnitt Pitches unterschiedlicher Längen vorgesehen und es erfolgt die Aufeinanderfolge der Pitches nach einer rechnerisch ermittelten und optimierten Folge (Pitchfolge).

Die Erfindung ist auf das dargestellte Ausführungsbeispiel nicht eingeschränkt. So ist es insbesondere möglich, anstelle von zwei breiten Umfangsnuten eine einzige vorzusehen.

## Patentansprüche

1. Fahrzeugreifen mit einem drehrichtungsgebunden und bezüglich des Umfanges der Lauffläche asymmetrisch gestalteten Laufstreifenprofil, welches somit fahrzeugbezogen einen Außen- und einen Innenabschnitt aufweist, in welchen pfeilartig zum Mittelbereich des Laufstreifens verlaufende Querrillen angeordnet sind, wobei im Mittelbereich des Laufstreifens zumindest eine, insbesondere gerade verlaufende breite Umfangsnut angeordnet ist und sowohl im Außen- als auch im Innenabschnitt Schulterblockreihen begrenzende Umfangsnuten vorgesehen sind, und wobei der Fahrflächenanteil im Außenabschnitt größer ist als im Innenabschnitt, dessen Fahrflächenanteil 55 bis 65% beträgt, dadurch gekennzeichnet, daß im mittleren Bereich des Innenabschnittes (I), an die dortige Schulterblockreihe (8) anschließend, eine Blockreihe (9) angeordnet ist, deren Blöcke (9a) in Umfangsrichtung durch jeweils zumindest eine Grundanhebung in den die Einzelblöcke (9a) trennenden Quernutbereichen gegenseitig abgestützt sind, und daß im Außenabschnitt (A) über einen Bereich von 30 bis 40 % der Laufstreifenbreite (B), gemessen vom äußeren Laufstreifenrand, der Fahrflächenanteil mindestens 75 % beträgt.

2. Fahrzeugreifen nach Anspruch 1, dadurch gekennzeichnet, daß der Fahrflächenanteil im Bereich des Außenabschnittes (A) mindestens 78 % und höchstens 90 % beträgt.

3. Fahrzeugreifen nach Anspruch 1 oder Anspruch 2, dadurch gekennzeichnet, daß die Grundanhebungen zwischen den Einzelblöcken (9a) der Blockreihe (9) über mindestens 70 % der diese Blockreihen trennenden Quemutbereiche vorgesehen sind.

4. Fahrzeugreifen nach einem der Ansprüche 1 bis 3, dadurch gekennzeichnet, daß sämtliche Quernuten (3, 4) entlang von schwach S-förmig gekrümmten Kurven verlaufen.

5. Fahrzeugreifen nach einem der Ansprüche 1 bis 4, dadurch gekennzeichnet, daß im Laufstreifenmittelbereich zwei breite, insbesondere gerade umlaufende Umfangsnuten (1) angeordnet sind, die durch ein Laufstreifenband (2) voneinander getrennt sind, welches die Umfangsmittellinie (M-M) des Profiles mitumfaßt, wobei die im Innenabschnitt (I) verlaufenden Quernuten in diesem Laufstreifenband als Sacknuten (3a) enden.

6. Fahrzeugreifen nach einem der Ansprüche 1 bis 5, dadurch gekennzeichnet, daß der den hohen Positivanteil umfassende Bereich des Laufstreifens im Außenabschnitt (A) neben der Schulterblockreihe (6) ein Laufstreifenband (5) umfaßt, in welchem die im Außenabschnitt (A) angeordneten Quernuten (4) als Sacknuten (4a) enden.

7. Fahrzeugreifen nach einem der Ansprüche 1 bis 6, dadurch gekennzeichnet, daß die Gesamtpitchanzahl im Laufstreifeninnen- und im Laufstreifenaußenabschnitt unterschiedlich gewählt wird, wobei sich auch die Pitchfolgen im Laufstreifeninnen- und im Laufstreifenaußenabschnitt voneinander unterscheiden.

## Claims

1. Vehicle tyre, having a tread strip profile which is adapted to the direction of rotation and is asymmetrically formed with respect to the circumference of the tread surface, said profile having, in consequence, in relation to the vehicle, an external portion and an internal portion, in which portions there are disposed transverse notches which extend in an arrow-like manner to the central region of the tread strip, at least one wide circumferential groove, more especially one which extends rectilinearly, being disposed in the central region of the tread strip, and circumferential grooves, which define rows of shoulder blocks, being provided both in the external portion and in the internal portion, and the travel surface part being greater in the external portion than in the internal portion, the travel surface part of which is between 55 % and 65 %, characterised in that a row of blocks (9) is disposed in the central region of the internal portion (I), adjacent to the row of shoulder blocks (8), the blocks (9a) of said row being each mutually supported in the circumferential direction by at least one basic raised portion in the transverse groove regions separating the individual blocks (9a), and in that the travel surface part in the external portion (A) is at least 75 % over a region of between 30 % and 40 % of the tread strip width (B), measured from the outer tread strip edge.

2. Vehicle tyre according to claim 1, characterised in that the travel surface part in the region of the external portion (A) is at least 78 % and at most 90 %.

3. Vehicle tyre according to claim 1 or claim 2, characterised in that the basic raised portions between the individual blocks (9a) of the row of blocks (9) are provided over at least 70 % of the transverse groove regions separating these rows of blocks.

4. Vehicle tyre according to one of claims 1 to 3, characterised in that all of the transverse grooves (3, 4) extend along gently S-shaped curves.

5. Vehicle tyre according to one of claims 1 to 4, characterised in that two wide, more especially rectilinearly circulating, circumferential grooves (1) are disposed in the central tread strip region, which grooves are separated from one another by a tread strip band (2), which includes the central circumferential line (M-M) of the profile, the transverse grooves which extend in the internal portion (I) terminating in this tread strip band as blind grooves (3a).

6. Vehicle tyre according to one of claims 1 to 5, characterised in that the region of the tread strip including the high positive part includes, in the external portion (A) adjacent to the row of shoulder blocks (6), a tread strip band (5) in which the transverse grooves (4), which are disposed in the external portion (A), terminate as blind grooves (4a).

7. Vehicle tyre according to one of claims 1 to 6, characterised in that the total pitch number in the internal portion and external portion of the tread strip is selected to be variable, the pitch sequences also differing from one another in the internal portion and external portion of the tread strip.

## Revendications

1. Pneumatique pour véhicule comportant une sculpture de bande de roulement qui est liée au sens de rotation et est agencée avec une forme dissymétrique au niveau de la périphérie de la surface de roulement et qui comporte par conséquent, d'une manière rapportée au véhicule, une partie extérieure et une partie intérieure dans lesquelles sont disposées des rainures transversales qui s'étendent en forme de flèches en direction de la partie médiane de la bande de roulement, et dans lequel au moins une rainure circonférentielle large, possédant notamment une forme rectiligne, est disposée dans la partie médiane de la bande de roulement, et des rainures circonférentielles délimitant des rangées de blocs d'épaulement sont prévues aussi bien dans la partie extérieure que dans la partie intérieure, et dans lequel le pourcentage de la surface d'application au sol est plus élevé dans la partie extérieure que dans la partie intérieure et est compris entre 55 et 65 %, caractérisé en ce que dans la partie médiane de la partie intérieure (I) est disposée une rangée de blocs (9) qui est voisine de la rangée de blocs d'épaulement (8) située en cet endroit et dont les blocs (9a) prennent appui les uns contre les autres, dans la direction circonférentielle, par au moins un bossage respectif de fond dans les régions de nervures transversales séparant les blocs individuels (9a), et que le pourcentage de la surface d'application au sol est égal à au moins 75 % dans la partie extérieure (A), dans une zone de 30 à 40 % de la largeur de la bande de roulement (B), mesurée à partir du bord extérieur de la bande de roulement.

2. Pneumatique pour véhicule selon la revendication 1, caractérisé en ce que le pourcentage de la surface d'application au sol dans la zone de la partie extérieure (A) est égal au minimum à 78 % et au maximum à 90 %.

3. Pneumatique pour véhicule selon la revendication 1 ou la revendication 2, caractérisé en ce que les bossages de fond sont prévus entre les blocs individuels (9a) de la rangée de blocs (9), sur au moins 70 % des zones des rainures transversales qui séparent ces rangées de blocs.

4. Pneumatique pour véhicule selon l'une des revendications 1 à 3, caractérisé en ce que toutes les rainures transversales (3, 4) s'étendent le long de courbes cintrées avec une forme de S adoucie.

5. Pneumatique pour véhicule selon l'une des revendications 1 à 4, caractérisé en ce que dans la partie médiane de la bande de roulement sont disposées deux rainures circonférentielles larges (1) qui s'étendent selon une disposition rectiligne et sont séparées l'une de l'autre par un ruban (2) de la bande de roulement qui englobe simultanément la ligne médiane circonférentielle (M-M) de la sculpture, les rainures transversales qui s'étendent dans la partie intérieure (I) se terminant dans ce ruban de bande de roulement sous la forme de rainures fermées (3a).

6. Pneumatique pour véhicule selon l'une des revendications 1 à 5, caractérisé en ce que la zone de la bande de roulement qui entoure la partie élevée de contact avec le sol comprend dans la partie extérieure (A), en plus de la série de blocs d'épaulement (6), un ruban (5) de la bande de roulement dans lequel les rainures transversales (4) disposées dans la partie extérieure (A) se terminent sous la forme de rainures fermées (4a).

7. Pneumatique pour véhicule selon l'une des revendications 1 à 6, caractérisé en ce que les nombres de pas totaux dans la partie intérieure et dans la partie extérieure de la bande de roulement sont choisis différents, les suites de pas étant également différentes l'une de l'autre dans la partie intérieure de la bande de roulement et dans la partie extérieure de la bande de roulement.
